# EUROPÄISCHE PATENTSCHRIFT

(11) **EP 0 804 813 B1**
(45) Veröffentlichungstag und Bekanntmachung des Hinweises auf die Patenterteilung: **27.03.2002**
(21) Anmeldenummer: 95920722.6
(22) Anmeldetag: 16.06.1995
(51) Int. Cl.: H01M 6/52, H01M 10/54

(54) **VERFAHREN ZUR REZYKLIERUNG VON BATTERIEN, INSBESONDERE TROCKENBATTERIEN**
BATTERY RECYCLING PROCESS, IN PARTICULAR FOR DRY BATTERIES
PROCEDE DE RECYCLAGE DE BATTERIES, NOTAMMENT DE BATTERIES SECHES

(30) Priorität: 20.06.1994 CH 194294; 14.09.1994 CH 279094; 31.10.1994 CH 324494; 31.10.1994 CH 324594
(43) Veröffentlichungstag der Anmeldung: 05.11.1997
(73) Patentinhaber: CT Umwelttechnik AG, CH-8404 Winterthur (CH)
(72) Erfinder: HANULIK, Jozef, CH-8032 Zürich (CH)
(74) Vertreter: Sulzer Management AG
(86) Internationale Anmeldenummer: CH9500136
(87) Internationale Veröffentlichungsnummer: WO9535583

(56) Entgegenhaltungen:
- EP-A- 0 075 978
- EP-A- 0 117 865
- EP-A- 0 191 752
- EP-A- 0 196 800
- EP-A- 0 244 901
- EP-A- 0 247 023
- EP-A- 0 284 135
- WO-A-88/04476
- WO-A-93/20593
- JP-A- 62 029 072
- US-A- 4 571 261
- RESOURCES CONSERVATION AND RECYCLING, Bd. 4, Nr. 3, 1.September 1990 Seiten 233-240, XP 000175807 BARTOLOZZI M 'THE RECOVERY OF METALS FROM SPENT ALKALINE-MANGANESE BATTERIES: A REVIEW OF PATENT LITERATURE'

## Beschreibung

Die vorliegende Erfindung betrifft Verfahren zur Rezyklierung von Trockenbatterien oder Batterien, die Cadmium, Zink, Blei oder Alkalimetalle enthalten, unter Verwendung pyrolytischer Methoden, wobei die Batterien unsortiert sein können und in geschreddeter oder ungeschreddeter Form anliegen.

Die EP-A- 191 752 offenbart eine oxidativ-thermische Vorbehandlung von galvanischen Elementen, bei der eine besondere Rückführung von Abgasen vorgeschlagen wird, um nachfolgend Schwermetalle abtrennen zu können. Die WO-A-93 20593 betrifft ein zweistufiges Pyrolyseverfahren zur Behandlung von Batterien, dessen zweite Stufe zu einer weiteren Reduktion des Quecksilbergehalts vorgesehen ist. In einem oxidativ-thermischen Verfahren zur Aufbereitung von Kleinbatterien, das in der EP-A- 244 901 beschrieben ist, werden aus einem Röstgut durch Siebung und Magnetabscheidung Fraktionen gebildet. In einem Verfahren gemäss EP-A- 075 978 wird aus sortierten Ni-Cd-Batterien nach einer Behandlung in einer reduzierenden Umgebung Cadmium in metallischer Form rückgewonnen.

Es sind eine Vielzahl von weiteren Verfahren zur Rezyklierung von Batterien bekannt, bei denen die Batterien nach ihrer Zusammensetzung sortiert werden müssen und bei denen das jeweilige Verfahren jeweils nur für eine Batteriensorte geeignet ist. Dies trifft beispielsweise auf das bekannte Verfahren der Firma S.N.A.M. in Lyon zu, welches nur zur Aufbereitung von Ni-Cd-Akkumulatoren geeignet ist. Weitere Beispiele für Verfahren zur Rezyklierung sortierter Batterien, beispielsweise gebrauchte Alkali-Mangan und Zink-Kohle-Batterien sind beispielsweise aus den japanischen Patentschriften JP-A-74/106'519 und JP-A-75/60'414 bekannt geworden. Hierbei wird vorgeschlagen, die entsprechenden Batterien zu verschrotten, mit Salzsäure zu versetzen und aus der Lösung durch Neutralisation mit NH₄OH bei pH 5 als Hydroxyd, Mangan und bei pH 9 und nach einer Zugabe von MnO2 beziehungsweise H₂O₂ als Mn₂O₃ abzutrennen. Gemäss der US-A-3'438'878 soll gleichzeitig Zink und Mangandioxyd bei der Elektrolyse einer schwefelsäurehaltigen Lösung gewonnen werden. All diese Verfahren, die als Ausgangsstoff sortierte Batterien verwenden, vermögen sich allein schon dadurch nicht durchzusetzen, weil der Rücklauf der Batterien relativ gering ist und immer eine Nachsortierung verlangt. Dies bedeutet, dass das Einzugsgebiet für eine einzige Anlage so gross ist, dass die Sammelkosten viel zu hoch werden. Zwar sind verschiedene Verfahren bekannt geworden, die die Sortiertechnik verbessern, wobei diese Verfahren einer Trennung nach chemischen oder geometrischen Kriterien folgen. Die aussortierte Menge bleibt dann aber immer noch als kritisches Abfallprodukt bestehen.

Einen Zwischenschritt bilden gewisse Verfahren, die sich darauf beschränken, die Toxizität quecksilberhaltiger Abfälle zu reduzieren, bei denen die Batterien unsortiert angenommen werden. Ein Beispiel bildet das Verfahren der Firma Voest, wobei den mechanisch zertrümmerten Batterien unter Vakuum bei einer Temperatur von circa 400°C der Quecksilberanteil entzogen wird. Ein ähnliches Prinzip wurde von den Firmen Mitsui Metals Engineering Co. und Nomura Kosan Co. im Clean Japan Center errichtet. Diese Methode, die als CJC-Verfahren bekannt ist, arbeitet so, dass die Batterien zunächst mechanisch von ihren Metallhüllen befreit und danach in zwei Stufen bei Temperaturen von 600°C - 800°C thermisch behandelt werden.

Die neuesten Verfahren sind solche, bei denen unsortierte Batterien rezykliert werden. Eine Lösung beschreibt beispielsweise die EP-A-150'821 der Firma Metallgesellschaft AG. Hier werden die Kleinbatterien erst mechanisch zertrümmert und gewisse Zusätze beigegeben, worauf dieses Produkt bei einer Temperatur von 580°C bis 700°C chlorierend geröstet wird. Aus dem Abgas wird das verflüchtigte Quecksilber ausgewaschen. Das Röstprodukt wird mit verdünnter Salzsäure behandelt und edlere Metalle dann aus der Lösung durch Zementation mit Zink ausgefällt. Die Firma Sumitomo Heavy Industries Ltd. entwickelte einen pyrometallurgischen Prozess zur Aufbereitung von unsortierten Batterien. Dieses Verfahren sieht vor, dass Batterienschrott in einen Schachtofen gegeben wird und dabei nacheinander drei Stufen durchläuft, nämlich eine Oxidationsstufe zur Abdestillierung des Quecksilbers, eine nachfolgende Reduktionsstufe zur Zinkverdampfung und schliesslich eine Hochtemperaturschmelzzone, in der der gesamte verbleibende Rest zu einem Schmelzprodukt verarbeitet wird. Wegen den direkt aufeinander folgenden thermischen Behandlungszonen im Schachtofen sind gewisse Probleme bezüglich der Entwicklung von Dioxinen und PCB beobachtet worden. Wegen der unvorhersehbaren Zusammensetzung der Ofenbeschickung ist die Temperaturführung äusserst schwierig zu handhaben. Eine entsprechende Testanlage in der Schweiz brannte durch. Später wurden die Probleme behoben.

Es gibt ferner ein Verfahren (CH-A 04 960/86-0), das mittlerweile auch im Dauerbetrieb positive Resultate gezeigt hat. Bei diesem Verfahren werden die unsortierten Batterien zuerst einer Pyrolysestufe unterzogen, bei der die organischen Anteile verbrannt sowie Wasser und Quecksilber abgedampft werden. Das Pyrolyseprodukt wird dann geschreddet und gewaschen, worauf unter Beigabe von HBF₄ eine Lösung entsteht, die mittels Elektrolyse in verschiedene, relativ sehr reine Metallfraktionen unterteilt werden kann. In einer verbesserten Version (WO 93/20593) wird nunmehr nach der ersten Pyrolyse und dem nachfolgenden Schredden eine zweite Pyrolyse durchgeführt.

Alle bekannten Verfahren, bei denen unsortierte Batterien rezykliert werden, haben das Bestreben, das anfallende Gemisch möglichst weitgehend in verschiedene, möglichst reine Fraktionen zu trennen. Alle bekannten Verfahren, mit Ausnahme des letztgenannten der Firma Recytec SA sind nie in die kommerzielle Phase gelangt. Kommerziell können diese Verfahren nur bestehen, wenn der Rücknahmepreis der unsortierten Batterien hoch ist. Diese Voraussetzung ist zwingend, weil die Anlagekosten enorm hoch sind.

Es ist daher Aufgabe der Erfindung, ein Verfahren zur Rezyklierung von unsortierten, Cadmium, Zink, Blei oder Alkalimetalle enthaltenden Batterien, insbesondere Trockenbatterien, zu schaffen, welches mit erheblich geringeren Anlageinvestitionen auskommt, so dass die Rezyklierungskosten wesentlich reduziert werden können.

Diese Aufgabe wird durch Verfahren der eingangs genannten Art gelöst, welche die in den unabhängigen Ansprüchen 1 und 8 aufgezeigten Verfahrensschritte umfassen. Die Erfindung ging von der Überlegung aus, dass sich die Kosten verringern lassen, wenn die Anzahl der für eine Wiederverwertung vorgesehenen Produkte tief gehalten wird. Eine Zerlegung des Ausgangsproduktes in Komponenten kam daher nicht in Frage.

Der Fachmann erkennt aus den erfindungsgemässen Verfahren sogleich, dass diese mit wenigen, handelsüblichen Anlagenteilen realisiert werden können. Das Verfahren gemäss Anspruch 1 umfasst im wesentlichen lediglich einen Speisebunker, einen Schredder, einen Rotationsofen sowie eine herkömmliche Gasreinigung mit Zyklon oder Staubfilter, Nasswaschfilter und Aktivkohlefilter. Dieses anlagetechnisch erheblich vereinfachte Verfahren beruht auf den Erkenntnissen, welche durch die Analyse des oxydierten Verbrennungsproduktes gewonnen wurden. Es hat sich nämlich gezeigt, dass dieses Verbrennungsprodukt ein äusserst geeigneter Rohstoff für die Zink/Cadmium/Blei-Wiedergewinnung in Zinkwerken ist.

Je nach der Lage der Abnahmebedingungen und den herrschenden Rohstoffpreisen kann das angefallene Produkt nach der oxidativen Verbrennung ohne weiteren anlagetechnischen Aufwand mit denselben Mitteln nochmals einer Verbrennung unterworfen werden, wobei diesmal die Verbrennung reduktiv stattfindet. Diese mögliche Weiterentwicklung geht aus dem abhängigen Anspruch 7 und dem unabhängigen Anspruch 8 hervor.

Die Lösung gemäss Anspruch 7 oder 8 geht so vor, dass in einem ersten Teil des Verfahrens die toxisch besonders heiklen Elemente abgetrennt werden und in einem zweiten Schritt das Restmaterial in zwei, maximal drei verschiedene Stoffgemische getrennt wird, die Ausgangsprodukte für bekannte industrielle, metallurgische Verfahren darstellen.

Weitere vorteilhafte Verfahrensmerkmale gehen aus den weiteren abhängigen Patentansprüchen hervor und sind in der nachfolgenden Beschreibung unter Bezugnahme auf die Zeichnungen erläutert.

Es zeigt:

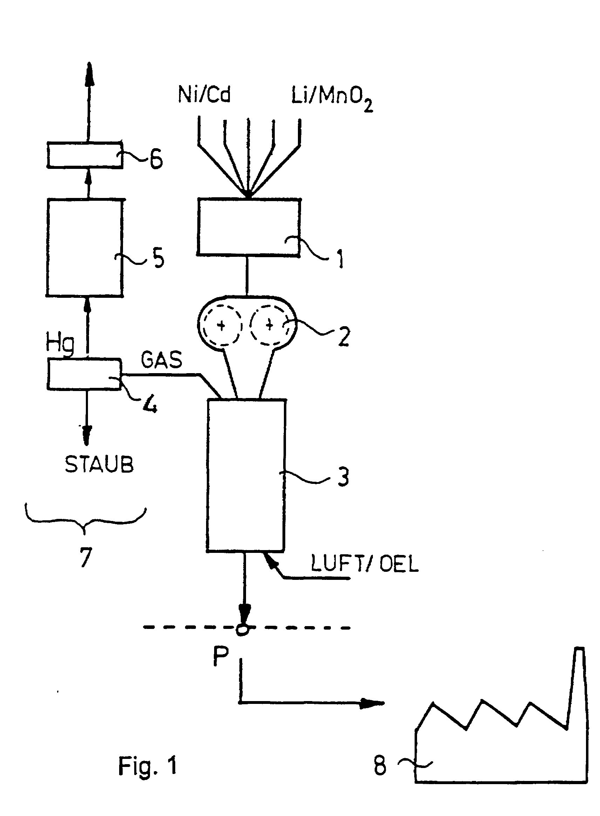

- Fig. 1: eine schematische Darstellung des Verfahrens in der einfachsten, aber vollständigen Variante;
- Fig. 2: die Darstellung des oxidativen Verbrennungsvorganges;
- Fig. 3: die eine Option darstellende zweite, reduktive Verbrennung und
- Fig. 4: eine Verfahren mit einer ersten und einer zweiten Behandlungsstufe.

Die über den Detailhandel gesammelten Batterien sind in ihrer Zusammensetzung vollkommen unterschiedlich. Relativ stark verbreitet sind beispielsweise Alkalibatterien, Nickel/Cadmium-Batterien oder Lithium-Manganoxyd-Batterien, um nur einige zu nennen. All diese Batterien gelangen vollkommen unsortiert und ungereinigt, zum Teil in Sammelbehältnissen aus Karton oder Plastik, direkt in einen Speisebunker 1. Es ist sinnvoll, jedoch nicht zwingend, mit einem Speisebunker zu arbeiten, da das Verfahren vorteilhafterweise kontinuierlich über eine längere Periode durchgeführt werden soll. Dies ist nicht zuletzt auch eine Frage der Wirtschaftlichkeit. Vom Speisebunker 1 gelangen die unsortierten Batterien über eine Speiseleitung in einen Schredder 2. Dessen Ausgang steht in direkter Verbindung mit dem nachfolgenden Ofen 3, so dass der Schredder 2 zur direkten Beschickung des Ofens geeignet ist. Beim Schredder handelt es sich um ein ohne Modifikationen direkt auf dem Markt erhältliches Anlageteil. Lediglich die ungewöhnliche Verbindung zwischen dem Schredder und dem Ofen 3 muss anlagespezifisch gefertigt werden.

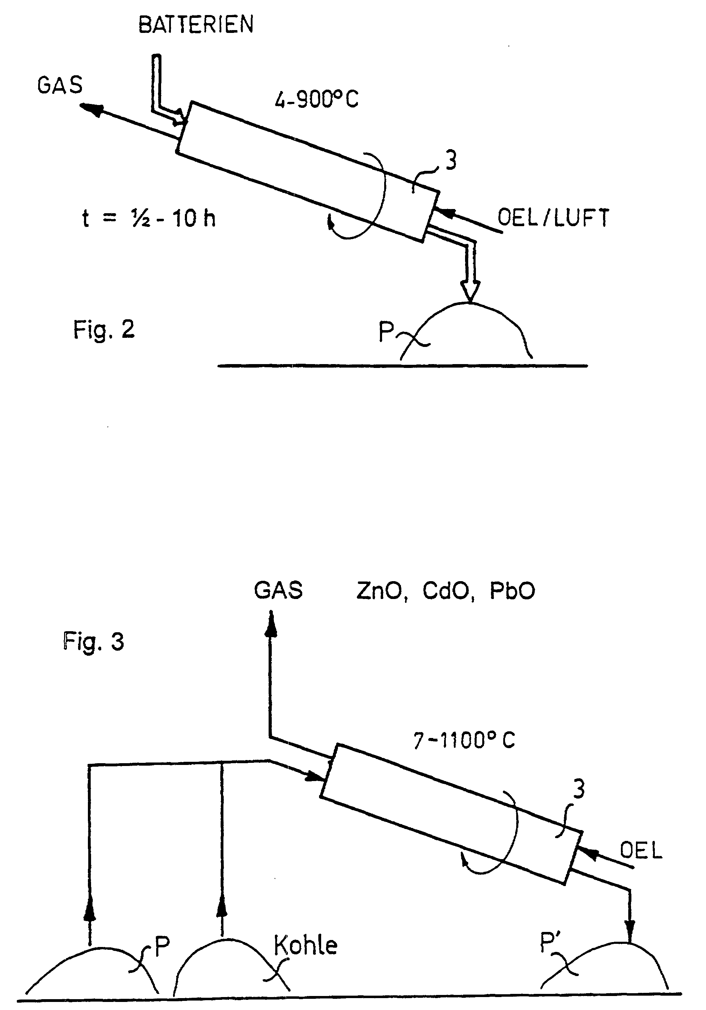

In der nun folgenden Verbrennung im Ofen 3 ist es wesentlich, dass das beschickte Gut während des Verbrennungsvorganges ständig vermischt wird, da dies die Verbrennung fördert und die Entgasung verbessert. Zudem muss ständig Luft zugeführt werden. Eine solche Verbrennung wird vorteilhafterweise mit einem Rotationsofen erreicht. Hierauf wird unter Bezug auf die Figur 2 später noch eingegangen. Die Verbrennungsgase werden aus dem Ofen abgelassen und einer Gasreinigung 7 zugeführt. Auch diese Gasreinigung 7 ist ein absolut üblicher Industriestandard. Die Gasreinigung 7 besteht hier aus einem ersten Zyklon oder Staubfilter 4, mittels dem entsprechend in den Abgasen vorhandener Staub abgetrennt wird, worauf die verbleibenden Gase in einen Nasswaschfilter 5 gelangen. Im Nasswaschfilter 5 werden insbesondere die Quecksilberdämpfe auskondensiert. Einige restliche ppm des Quecksilbers vermögen diesen Filter zu passieren und werden daher, wiederum in bekannter Weise, mittels einem Aktivkohlefilter 6 den Abgasen entnommen. Die verbleibenden Abgase entsprechen den Luftreinhalteverordnungen und können direkt in die Atmosphäre entlassen werden.

Aus dem Rotationsofen 3 gewinnt man folglich ein oxydiertes Verbrennungsprodukt P. Dieses kann direkt oder indirekt der Metallgewinnung 8 zugeführt werden. Im hier dargestellten Beispiel erfolgt die Zuführung des oxydierten Verbrennungsproduktes P direkt an die Metallgewinnung 8. Untersuchungen haben gezeigt, dass dieses Verbrennungsprodukt P ausserordentlich geeignet ist als Rohstoff für die Metallgewinnung. Das Produkt ist frei von Quecksilber (Restanteil unter 1 ppm), enthält keine organischen Bestandteile mehr und bei der weiteren Verarbeitung in der Metallgewinnung entstehen folglich keine Dioxine oder PCB-Rückstände. Die Zusammensetzung des Produktes P geht aus der nachfolgenden Liste unter Berücksichtigung der erfahrungsgemäss festgestellten Prozentzahlen hervor.

| Bestandteile | prozentuale Anteile |
|---|---|
| ZnO | 10 - 20 |
| CdO | 2 - 4 |
| Fe₂O₃ | 25 - 30 |
| PbO₂ | 2 - 4 |
| MnO₂ | 20 - 40 |
| Graphit | 5 - 10 |
| Spurenelemente und ¦ Salze | Rest |

Dieses labormässig erzeugte Produkt P wurde verschiedenen Zinkwerken zugeleitet und dort auf Eignung zur Verwendung als Rohprodukt für die Zink-/Cadmium-/und Bleigewinnung untersucht. Die Untersuchungen haben gezeigt, dass dieser Rohstoff geeignet ist und erheblich höhere Konzentrationen der zu gewinnenden Metalle aufweist als die üblichen Rohstoffe.

Der Vermeidung von Dioxinen und PCB-Anteilen wird besonderes Gewicht beigemessen. Es ist daher wichtig, dass folgende Betriebsbedingungen eingehalten werden:
1. Die Ofenbeschickung mit frisch geschreddeten Batterien erfolgt kontinuierlich und in Gegenrichtung zur Luftzufuhr.
2. Die Betriebstemperatur im Rotationsofen beträgt vorzugsweise 600°C bis 700°C. Unter gewissen Bedingungen können Temperaturabweichungen nach unten bis 400°C und nach oben bis auf 800°C zugelassen werden. Die Betriebstemperatur kann auch in Durchlaufrichtung steigend sein, vorzugsweise zuerst zwischen 400°C und 700°C gehalten (erste Phase), im weiteren Verlauf bis auf 900°C gesteigert und gehalten werden (zweite Phase). Während in der ersten Phase der Verbrennung ein Abbau unter Meidung von Dioxinen und PCB erreicht wird, wird in der zweiten Phase das restliche Quecksilber vollständig abgedampft.
3. Die Verbrennungsdauer, das heisst die Aufenthaltsdauer der Batteriepartikel im Rotationsofen, darf nicht unterhalb einer halben Stunde oder einer Stunde liegen und beträgt nicht mehr als zehn Stunden. Vorteilhafterweise sollte sie zwischen 45 und 90 Minuten betragen.

Diese Bedingungen sind in der Figur 2 schematisch dargestellt. Mit derselben Anlage, jedoch ohne den Schreddervorgang kann das oxidative Verbrennungsprodukt P in ein zweites, reduktives Verbrennungsprodukt P' weiterverarbeitet werden. Dieser Vorgang ist in der Figur 3 dargestellt. Der Rotationsofen 3 wird nun mit dem oxidativen Verbrennungsprodukt P zusammen mit einem Anteil Kohle beschickt. Die Kohle stellt dabei ein hier bevorzugtes Reduktionsmittel dar. Andere Reduktionsmittel sind jedoch nicht ausgeschlossen. Im Vergleich zum oxidativen Verbrennungsvorgang findet der reduktive Verbrennungsvorgang bei einer erhöhten Temperatur statt. Diese kann im Prinzip zwischen 500°C und 1300°C liegen, wird sich jedoch vorzugsweise zwischen 700°C und 1100°C befinden. Die hierbei entstehenden gasförmigen Anteile werden vorgängig abdestilliert. Die verbleibenden Abgase können durch die vorher beschriebene Abgasreinigung geführt werden. Auf diese Weise wird aus dem Produkt P Zink, Cadmium und, falls eventuell vorhanden, Blei entfernt, indem diese Metalle abdestilliert und in der Dampfphase reoxidiert werden. Das nun verbleibende reduktive Verbrennungsprodukt P' kann wiederum der Metallgewinnung 8 zugeführt werden. Dieses Produkt, welches nun mehrheitlich aus Fe₂O₃ und MnO₂ besteht, ist nunmehr ein Rohstoff, den Stahlwerke als Ferro-Mangan gerne entgegennehmen. Die Herstellung dieses Verbrennungsproduktes P' wird man immer dann wählen, wenn der Absatz des Produktes P wenig gefragt ist und somit auch einen besonders tiefen Preis hat. Somit braucht der Batterierezyklierungsbetrieb kein Rohstofflager anzulegen. Die beim zweiten, reduktiven Verbrennungsvorgang abdestillierten Elemente Zink und Cadmium sowie Blei lassen sich ohnehin problemlos absetzen.

Die Verbrennung in der zweiten Stufe erfolgt bei einer höheren Temperatur als in der ersten. Bei dieser Temperatur wird die im Rotationsofen vorhandene Schlacke reduziert und Metalle verdampft. Durch eingeblasene Luft oxidieren die Metalle in der Gasphase oberhalb der Schlacke wieder, bilden Oxide in feinster, fester Form und werden mit der restlichen Luft aus dem Rotationsofen in eine mehrstufige Gasreinigung geblasen.

Natürlich lässt sich auch dieses einfache Verfahren wiederum mittels gewisser Optionen ausweiten, um spezielle Fraktionen abzuspalten, doch würden diese wiederum die äusserst preiswerte Anlage verteuern, wodurch die kommerziellen Vorteile teilweise wieder verloren gehen würden. Hingegen können solche Schritte vom Abnehmer dieser Produkte vorgenommen werden, insbesondere dann, wenn die dazu erforderliche Anlage ohnehin bei diesen Metallgewinnungsbetrieben vorhanden sind.

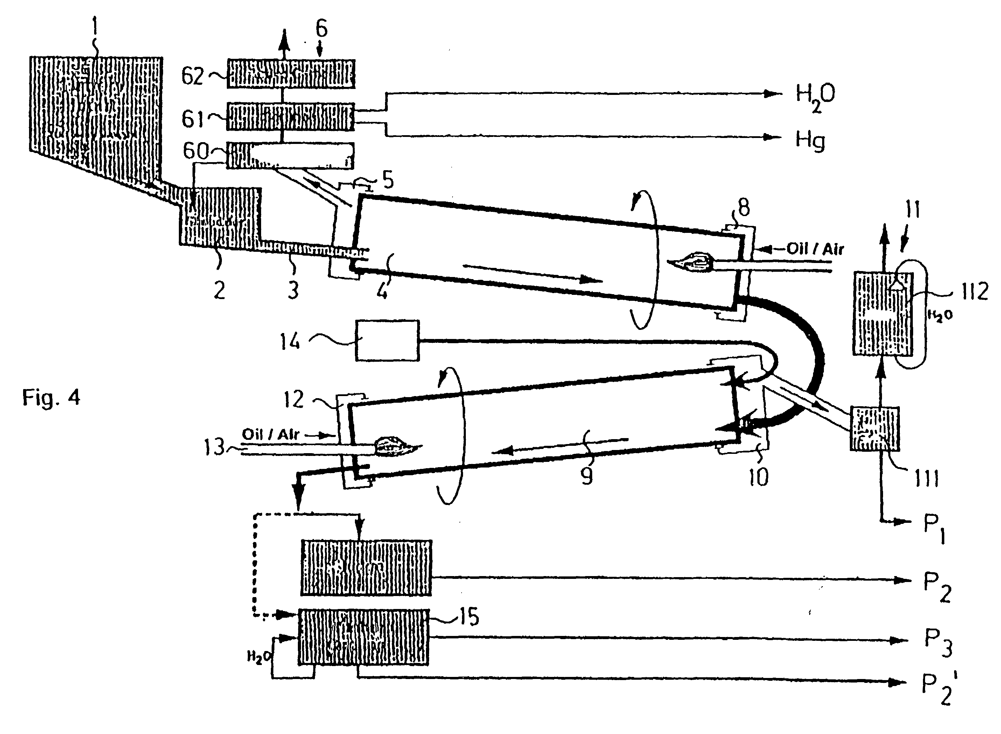

In Figur 4 ist das Verfahren gemäss Anspruch 8 schematisch dargestellt. Von einem Vorratsbunker 1 ausgehend, in dem die Batterien oder daraus gefertigter Schrott anliegen, gelangen diese direkt oder wie hier dargestellt über einen Schredder 2 und eine Speiseleitung 3' in einen Rotationsofen 4'. Der Rotationsofen wird von der einen Seite beschickt und von der anderen Seite befeuert. Der Rotationsofen lässt sich einerseits bezüglich des Neigungswinkels und andererseits bezüglich der Rotationsgeschwindigkeit variieren. Übliche Rotationsofen haben eine Länge von 7-12 m. Es kann aber in der ersten Stufe ein überlanger Rotationsofen von 25-50 m eingesetzt werden, der ein erhebliches Temperaturgefälle von der ausgangsseitigen Befeuerung zur Eingangsseite erlaubt. Durch die Rotationsgeschwindigkeit lässt sich der Grad der Durchmischung anpassen, während der Neigungswinkel die Durchsatzzeit variiert. Wird chargenweise gearbeitet, so kann der Rotationsofen während einer bestimmten Zeit horizontal gelagert sein und lediglich zur Austragung des festen Verbrennungsproduktes entsprechend geneigt werden.

Während des Betriebes durchläuft der Batterieschrott den Rotationsofen von der Beschickungsseite zur Befeuerungsseite. Auf der Beschickungsseite ist eine gedichtete Gasabführung 5' vorgesehen, über die die nicht festen Verbrennungsprodukte in eine mehrstufige Gasreinigung 6' gelangen. Auf der gegenüberliegenden Befeuerungsseite befindet sich eine Brennerdüse 7', über die kombiniert sowohl Oel als auch Luft in den Rotationsofen 4' eingeblasen wird. An der Befeuerungsseite ist der Rotationsofen 4' mit einer gedichteten Austragsvorrichtung 8' versehen. Dieser erste Rotationsofen 4' wird mindestens im eingangsseitigen Bereich, vorzugsweise bis zur Mitte des Ofens, unterhalb jener Temperatur betrieben, die zur Dioxinbildung führen kann, nämlich unter 720 °C. Ueblich sind Temperaturen zwischen 500 °C und 700 °C und insbesondere wird eine Verbrennungstemperatur von rund 600 °C bevorzugt. Bei diesen Temperaturen wird sichergestellt, dass die organischen Anteile vollständig verbrennen und Wasser sowie eventuell vorhandenes Quecksilber weitgehend verdampfen. Im ausgangsseitigen Bereich des ersten Rotationsofen kann die Temperatur bis auf 900 C erhöht sein, um ein vollständiges Abdampfen von Quecksilber bis unter 1 ppm zu gewährleisten. Diese erste Behandlungsstufe führt erfahrungsgemäss zu einer Gewichtsreduktion von 30 bis 50 %. Folglich verlassen 50 bis 70 Gewichts-% der beschickten Menge den Rotationsofen 4' auf der Befeuerungsseite. Die 30 bis 50 Gewichts-% flüchtiger Anteile verlassen den Rotationsofen 4' über die gedichtete Gasabführung 5' und werden in der mehrstufigen Gasreinigung 6' gereinigt. Dies erfolgt in einem ersten Schritt durch einen Zyklon oder Heissfilter 60, in dem feste Fluganteile abgefiltert werden, die wiederum beispielsweise via den Schredder 2 in den Prozess zurückgeleitet werden können. Ueber einen Nassreiniger 61 werden die verbliebenen Gase geleitet, über den rund 0 bis 1 Gewichts-% Quecksilber, falls vorhanden, sowie 15 bis 20 Gewichts-% Wasser abgeschieden werden. Die so gereinigten Gase werden in einer letzten Stufe über ein Aktivkohlefilter 62 schliesslich als gereinigte Abgase abgegeben.

Die festen Verbrennungsprodukte der ersten Behandlungsstufe gelangen vom ersten Rotationsofen 4' in einen zweiten Rotationsofen 9. Der zweite Rotationsofen 9 entspricht im Aufbau vollständig dem ersten Rotationsofen 4'. Beschickungsseitig ist wiederum eine gedichtete Gasabführung 10 und eine mehrstufige Gasreinigung 11 vorgesehen. Auf der Befeuerungsseite ist entsprechend ebenfalls eine gedichtete Austragungsvorrichtung 12 angebracht. Durch die gedichtete Austragungsvorrichtung 12 ragt wiederum eine Brennerdüse 13 in den Rotationsofen 9 hinein. Auch hier führt die Brennerdüse 13 sowohl Oel als auch Luft in den Verbrennungsraum des Rotationsofens 9. Mittels einer Reduktionsmittelbeschickung 14 wird beschickungsseitig ein Reduktionsmittel in den zweiten Rotationsofen 9 eingeleitet. Dies kann getrennt erfolgen oder gemeinsam mit den festen Verbrennungsprodukten, die aus dem ersten Rotationsofen 4' in den zweiten Rotationsofen 9 geführt werden. Im Falle einer gemeinsamen Beschickung können vor der Beschickung die festen Verbrennungsprodukte aus der ersten Behandlungsstufe mit dem Reduktionsmittel vermischt werden, bevor diese gemeinsam eingeleitet werden. Als Reduktionsmittel eignet sich insbesondere Steinkohle. Dies ist ein besonders preiswertes Reduktionsmittel, welches gleichzeitig als Energieträger dient. Das feste Verbrennungsprodukt der zweiten Behandlungsstufe beträgt noch 20 bis 40 Gewichts-% des ursprünglich eingetragenen Gewichtes des Batterienschrotts.

Die Verbrennung der zweiten Behandlungsstufe erfolgt bei einer höheren Temperatur als in der ersten Behandlungsstufe, nämlich bei einer Temperatur von 900 °C bis 1200 °C. Bei dieser Temperatur wird die im Rotationsofen 9 vorhandene Schlacke reduziert und die vorhandenen Zink-, Cadmium- oder Bleianteile verdampft. Durch die über die Düse 13 eingeblasene Luft oxidieren die Zink-, Cadmium- oder Bleianteile, die sich in der Gasphase oberhalb der Schlacke befinden und bilden so die entsprechenden Oxide in feinster, fester Form und werden mit der restlichen Luft aus dem Rotationsofen 9 via der gedichteten Gasabführung 10 in die mehrstufige Gasreinigung 11 geblasen. Auch hier gelangen die ausgeblasenen flüchtigen Anteile erst in einen Heissfilter 111, in dem die nun festen Zink-, Cadmium- oder Bleioxide abgetrennt werden. Diese bilden ein Oxidgemisch, welches ein mit P1 bezeichnetes Produkt bilden. Dieses Produkt stellt ungefähr 30 bis 50 Gewichts-% der ursprünglich eingegebenen Batterien beziehungsweise Batterienschrottes. Die im Heissfilter 111 abgetrennten Abgase werden auch hier wiederum über einen Nassreiniger 112 geleitet, bevor sie endgültig an die Atmosphäre abgegeben werden. Die dritte Reinigungsstufe mittels einem Aktivkohlefilter kann hier entfallen.

Die auf der Befeuerungsseite des zweiten Rotationsofens 9 ausgetragene Schlacke enthält im wesentlichen Eisen, Nickel und Manganmetalle sowie Oxide und einen Restanteil an Verunreinigungen. Diese Schlacke bildet ein zweites wiederverwertbares Produkt, welches hier mit P2 bezeichnet ist. Dieses Produkt P2 ist für die direkte Wiederverwendung als Ausgangsprodukt in der metallgewinnenden Industrie höchst willkommen. Es kann jedoch der Fall sein, dass ein relativ erheblicher Anteil löslicher Salze, nämlich circa 3 bis 6 Gewichts-% des ursprünglichen Ausgangproduktes lösliche Salze darstellen. In diesem Fall wird die Schlacke über eine Wasch- und Kühleinheit 15 geführt. So lassen sich die löslichen Salze als weiteres Produkt P3 abtrennen. Dieser Verfahrensschritt lohnt sich insbesondere, wenn ein relevanter Anteil der löslichen Salze wirtschaftlich wiederverwertet werden kann. Dies trifft insbesondere auf Lithiumsalze zu. Das verbleibende unlösliche Produkt ist mit P2' gekennzeichnet und setzt sich im wesentlichen gleich zusammen wie das Produkt P2 und ist gewichtsmässig lediglich um die löslichen Anteile reduziert.

Das erfindungsgemässe äusserst kostengünstige Verfahren liefert im Prinzip lediglich zwei Endprodukte an. Das Produkt P1, bestehend aus einem Gemisch von Zink-, Cadmium- oder Bleioxiden, dient als Ausgangsprodukt für die gemeinsame Gewinnung von Zink und Blei im bekannten Schachtofenverfahren der Imperial Smelting Corporation. Die im Produkt P1 ebenfalls vorhandenen Cadmiumoxide lassen sich ohne Aenderung des Verfahrens ebenfalls abtrennen. Folglich stellt das Produkt P1 ein verkäufliches Ausgangsprodukt für die Metallgewinnungsindustrie dar.

Während das Produkt P1 das Oxidationsprodukt der zweiten Behandlungsstufe darstellt, ist das Produkt P2 das Reduktionsprodukt der zweiten Behandlungsstufe. Das Produkt P2, dessen mengenmässig grösste Anteile Eisen, Nickel und Mangan sind, lässt sich in dieser Mischung ohne weitere Auftrennung direkt der Stahlindustrie zuführen. Die Verwendung des Produktes P2 in der Stahlindustrie entspricht absolut herkömmlichen Methoden und braucht hier nicht des weiteren beschrieben zu werden. Das eben Gesagte trifft selbstverständlich auch auf das Produkt P2' zu. Das Produkt P3 fällt nur an, wenn bekannt ist, dass ein wesentlicher Anteil der löslichen Salze wertvolle wiederverwendbare Anteile enthält. Auf das Produkt P3 kann prinzipiell immer auch verzichtet werden.

Erste Berechnungen haben ergeben, dass das erfindungsgemässe Verfahren die Rezyklierungskosten für unsortierte Altbatterien um das Drei- bis Siebenfache im Vergleich zu den bekannten Verfahren reduziert. Die Gründe hierfür sind vielfältig. Zum einen sind die Anlagekosten im Vergleich zu den bekannten Verfahren äusserst niedrig, ferner ist das Verfahren völlig untoxisch und schliesslich ist der Bedarf an teurer Energie äusserst bescheiden. Dies ergibt sich aus zwei Gründen, nämlich zum ersten, weil in der ersten Behandlungsstufe diverse Metalle exotherm oxidieren und zum zweiten, weil in der zweiten Behandlungsstufe das Reduktionsmittel einen billigen Energieträger darstellt, nämlich Steinkohle.

Das erfindungsgemässe Verfahren lässt sich wie hier dargestellt und beschrieben kontinuierlich betreiben, indem mit zwei nacheinander geschalteten Rotationsöfen gearbeitet wird, wodurch die Handlingkosten äusserst niedrig sind, weil dann das Verfahren praktisch vollautomatisiert fast ohne Personal ablaufen kann, was einen wesentlichen Vorteil in den Hochlohnländern darstellt. Das Verfahren kann aber auch nur mit einem Rotationsofen betrieben werden, wobei dann der Betrieb chargenweise erfolgt. In diesem Fall fällt selbstverständlich auch der zweite Heissfilter und der zweite Nassreiniger weg. Hierdurch reduzieren sich die ohnehin bereits tiefen Investitionskosten abermals, womit das Verfahren auch in Entwicklungsländern akzeptabel wird, obwohl der manuell zu verrichtende Arbeitsaufwand erhöht ist.

Zusammenfassend kann folgendes festgehalten werden: Um die Anlagekosten für die Durchführung eines Verfahrens zur Rezyklierung von unsortierten Batterien zu senken, wird ein erheblich vereinfachtes Verfahren vorgeschlagen. Hierbei werden die unsortierten Batterien, wie sie aus der Sammlung anfallen, von einem Speisebunker (1) über einen Schredder (2) direkt in einen Rotationsofen (3) geführt. Hierbei werden die geschreddeten Batterien bei einer Temperatur von 400°C bis 900°C während vorzugsweise 45 bis 90 Minuten oxidativ verbrannt. Die anfallenden Verbrennungsgase werden über eine Gasreinigungsanlage (7) geleitet, die aus den bekannten Elementen Staubfilter (4), Nasswaschfilter (5) und Aktivkohlefilter (6) besteht. Das nach der Verbrennung vorliegende, oxidierte Verbrennungsprodukt. (P) wird der Metallgewinnung (8) zugeführt. Das Verbrennungsprodukt (P) kann in einem weiteren beziehungsweise späteren Schritt nochmals durch den Rotationsofen (3) unter Beigabe eines Reduktionsmittels, Kohle, verbrannt werden, wonach das dann anfallende reduktive Verbrennungsprodukt wiederum der Metallgewinnung (8) zugeführt werden kann.

## Patentansprüche

1. Verfahren zur Rezyklierung von Batterien, die Cadmium, Zink, Blei oder Alkalimetalle enthalten, unter Verwendung pyrometallurgischer Methoden, wobei die Batterien unsortiert sein können und in geschreddeter oder ungeschreddeter Form anliegen, welches Verfahren folgende Schritte umfasst:
- die Batterien, Bestandteile der Batterien oder des daraus geformten Schrotts werden bei Temperaturen unter 900°C, vorzugsweise bei Temperaturen zwischen 500°C und 850°C in einer ersten Behandlungsstufe oxidiert, wobei Wasser und eventuell vorhandene Quecksilberanteile verdampfen und organische Anteile verbrennen;
- die gasförmigen und flüchtigen Anteile der ersten Behandlungsstufe werden gereinigt;
- das nach der ersten Behandlungsstufe anliegende feste Verbrennungsprodukt, nämlich eine Schlacke, wird unter Beigabe eines Reduktionsmittels, insbesondere Steinkohle, bei Temperaturen zwischen 900°C und 1200°C abermals behandelt, wobei die Schlacke reduziert wird und die verdampfenden Zink-, Cadmium-, Blei- und/oder Alkalimetallanteile in einer luftenthaltenden Gasphase oberhalb der Schlacke oxidiert und ausgeblasen werden;
- die oxidierten Anteile (P1) und die reduzierten Anteile (P2, P2') der zweiten Behandlungsstufe getrennt unterschiedlichen Metallgewinnungsindustrien zugeführt werden.

2. Verfahren nach Anspruch 1, **dadurch gekennzeichnet, dass** das Verfahren chargenweise durch Wiederholung in einem einzigen Rotationsofen (4) durchgeführt wird.

3. Verfahren nach Anspruch 1, **dadurch gekennzeichnet, dass** das Verfahren nacheinander in zwei Rotationsöfen (4, 9) durchgeführt wird.

4. Verfahren nach Anspruch 3, **dadurch gekennzeichnet, dass** das Verfahren kontinuierlich betrieben wird.

5. Verfahren nach Anspruch 3 oder 4, **dadurch gekennzeichnet, dass** mindestens der erste Rotationsofen überlang, d.h. 25 - 50 m lang ist und mit einem Temperaturgefälle von der Ausgangsseite zur Eingangsseite betrieben wird.

6. Verfahren nach einem der Ansprüche 2 bis 5, **dadurch gekennzeichnet, dass** die Prozessparameter durch die Steuerung der Rotationsgeschwindigkeit des oder mindestens eines Rotationsofens und durch die Neigung desselben erfolgt.

7. Verfahren nach einem der Ansprüche 2 bis 6, **dadurch gekennzeichnet, dass** in beiden Behandlungsstufe die Schlacke und Luft im Gegenstrom bewegt werden.

8. Verfahren nach einem der Ansprüche 1 bis 7, **dadurch gekennzeichnet, dass** die in der zweiten Behandlungsstufe verdampften und oxidierten Metalle (P1) der Blei-Zink-Gewinnung zugeführt werden.

9. Verfahren nach einem der Ansprüche 1 bis 8, **dadurch gekennzeichnet, dass** die reduzierte Schlacke (P2, P2') der zweiten Behandlungsstufe der Stahl- und/oder Mangangewinnung zugeleitet wird.

10. Verfahren nach einem der Ansprüche 1 bis 9, **dadurch gekennzeichnet, dass** die Verbrennungsgase der ersten Behandlungsstufe nacheinander über einen Heissfilter (60), einen Nassreiniger (61) und einen Aktivkohlefilter (62) geleitet werden.

11. Verfahren nach Anspruch 10, **dadurch gekennzeichnet, dass** die im Heissfilter (60) verbleibenden Anteile in die erste Behandlungsstufe rückgeführt werden.

12. Verfahren nach einem der Ansprüche 1 bis 11, **dadurch gekennzeichnet, dass** die Schlacke der zweiten Behandlungsstufe gekühlt und gewaschen wird und die löslichen Salze (P3) abgetrennt werden.

13. Verfahren nach einem der Ansprüche 1 bis 12, **dadurch gekennzeichnet, dass** die in der zweiten Behandlungsstufe verdampften und oxidierten Metalle (P1) mittels einem Heissfilter (111) von den Abgasen getrennt werden.

## Claims

1. Process for recycling batteries which contain cadmium, zinc, lead or alkaline metals using pyrometallurgical methods, where the batteries can be unsorted and can be present in shredded or unshredded form, **characterised by** the following procedural steps:
- the batteries, constituents of the batteries or of the scrap formed therefrom are oxidised at temperatures below 900°C, preferably at temperatures between 500°C and 850°C in a first treatment step, with water and any mercury components that may be present vaporising and organic components being burned;
- the gaseous and volatile constituents of the first treatment step are cleaned;
- the solid product of combustion resulting from the first treatment step, namely a slag, is treated again after addition of a reducing medium, in. particular hard coal, at temperatures between 900°C and 1200°C, with the slag being reduced and the vaporising zinc, cadmium, lead or alkaline metal compounds being oxidised in the gas phase above the slag and blown out;
- the oxidised components (P1) and the reduced components (P2, P2') of the second treatment step are separately delivered to different metal winning industries.

2. Process in accordance with claim 1, **characterised in that** the process is carried out in batches by repetition in a single rotary furnace (4).

3. Process in accordance with claim 1, **characterised in that** the process is carried out successively in two rotary furnaces (4, 9).

4. Process in accordance with claim 3, **characterised in that** the process is operated continuously.

5. Process in accordance with claim 3 or 4, **characterised in that** at least the first rotary furnace is of excessive length, i.e. 25 - 50 m in length, and is operated with a temperature gradient from the exit side to the entrance side.

6. Process in accordance with one of the claims 2 to 5, **characterised in that** the process parameters result from the control of the rotational speed of the rotary furnace or at least one of the rotary furnaces and by its inclination.

7. Process in accordance with one of the claims 2 to 6, **characterised in that** in both treatment stages the slag and the air are moved in counterflow to one another.

8. Process in accordance with one of the claims 1 to 7, **characterised in that** the metals (P1) vaporised and oxidised in the second treatment stage are fed to the lead and zinc winning process.

9. Process in accordance with one of the claims 1 to 8, **characterised in that** the reduced slag (P2, P2') of the second treatment step is fed to the steel and/or manganese winning process.

10. Process in accordance with one of the claims 1 to 9, **characterised in that**. the combustion gases of the first treatment stage are successively led over a hot filter (60), a wet cleaner (61) and an activated carbon filter (62).

11. Process in accordance with claim 10, **characterised in that** the components remaining in the hot filter (60) are fed back to the first treatment step.

12. Process in. accordance with one of the claims 1 to 11, **characterised in that** the slag of the second treatment stage is cooled and washed and the soluble salts (P3) are separated off.

13. Process in accordance with one of the claims 1 to 12, **characterised in that** the metals (P1) vaporised and oxidised in the second treatment stage are separated out of the exhaust gases by a hot filter

## Revendications

1. Procédé de recyclage de batteries qui contiennent du cadmium, du zinc, du plomb ou des métaux alcalins, en utilisant des méthodes pyrométallurgiques, où les batteries peuvent être non triées et se présenter sous forme découpée ou non découpée, le procédé comprenant les étapes suivantes :
- les batteries, composants des batteries ou de la ferraille formée à partir de celles-ci sont oxydées à des températures inférieures à 900°C, de préférence à des températures entre 500°C et 850°C dans un premier étage de traitement, où l'eau et des parts de mercure éventuellement présentes s'évaporent et des parts organiques brûlent ;
- les parts gazeuses et volatiles du premier étage de traitement sont nettoyées ;
- le produit de combustion solide obtenu après le premier étage de traitement, à savoir une scorie, est traité de nouveau en ajoutant un agent de réduction, notamment de la houille, à des températures entre 900°C et 1200°C, où la scorie est réduite et les parts de zinc, de cadmium, de plomb et/ou de métaux alcalins qui s'évaporent sont oxydées dans une phase gazeuse contenant de l'air au-dessus de la scorie et sont soufflées vers l'extérieur ;
- les parts oxydées (P1) et les parts réduites (P2, P2') du deuxième étage de traitement sont amenées séparément à des industries d'extraction du métal différentes.

2. Procédé selon la revendication 1, **caractérisé en ce que** le procédé est exécuté en charges par répétition dans ur seul four rotatif (4).

3. Procédé selon la revendication 1, **caractérisé en ce que** le procédé est exécuté successivement dans deux fours rotatifs (4, 9).

4. Procédé selon la revendication 3, **caractérisé en ce que** le procédé est exécuté continuellement.

5. Procédé selon la revendication 3 ou 4, **caractérise en ce qu'**au moins le premier four rotatif a une surlongueur, c'est-à-dire une longueur de 25-50 m et est amené à fonctionner avec une chute de température depuis le côté sortie vers le côté entrée.

6. Procédé selon l'une des revendications 2 à 5, **caractérisé en ce que** les paramètres de processus ont lieu par la commande de la vitesse de rotation du ou au moins d'un four rotatif et par l'inclinaison de celui-ci.

7. Procédé selon l'une des revendications 2 à 6, **caractérisé en ce que** dans les deux étages de traitement, la scorie et l'air sont déplacés en flux contraire.

8. Procédé selon l'une des revendications 1 à 7, **caractérisé en ce que** les métaux (P1) évaporés et oxydés dans le deuxième étage de traitement sont acheminés à l'extraction de plomb et de zinc.

9. Procédé selon l'une des revendications 1 à 8, **caractérisé en ce que** la scorie réduite (P2, P2') du deuxième étage de traitement est acheminée à l'extraction d'acier et/ou de manganèse.

10. Procédé selon l'une des revendications 1 à 9, **caractérisé en ce que** les gaz de combustion du premier étage de traitement sont amenés à passer successivement sur un filtre chaud (60), un nettoyeur par voie humide (61) et un filtre à charbon actif (62).

11. Procédé selon la revendication 10, **caractérisé en ce que** les parts restantes dans le filtre chaud (60) sont ramenées dans le premier étage de traitement.

12. Procédé selon l'une des revendications 1 à 11, **caractérisé en ce que** la scorie du deuxième étage de traitement est refroidie et lavée, et les sels solubles (P3) sont séparés.

13. Procédé selon l'une des revendications 1 à 12, **caractérisé en ce que** les métaux (P1) évaporés et oxydés dans le deuxième étage de traitement sont séparés au moyen d'un filtre chaud (111) des gaz d'échappement.
